# EUROPEAN PATENT SPECIFICATION

(11) **EP 3 468 166 B1**
(45) Date of publication and mention of the grant of the patent: **27.05.2020**
(21) Application number: 16904466.6
(22) Date of filing: 18.09.2016
(51) Int. Cl.: H04N 5/225, H04N 5/232, F16M 11/12, G03B 17/56, F16M 11/20

(54) **CAMERA OPTICAL AXIS ADJUSTING DEVICE, AND CAMERA HAVING SAME**
VORRICHTUNG ZUR EINSTELLUNG EINER OPTISCHEN ACHSE EINER KAMERA UND DAMIT VERSEHENE KAMERA
DISPOSITIF DE RÉGLAGE DE L'AXE OPTIQUE D'UNE CAMÉRA ET CAMÉRA ÉQUIPÉE DE CELUI-CI

(30) Priority: 06.06.2016 CN 201620546744 U
(43) Date of publication of application: 10.04.2019
(73) Proprietor: Hangzhou Hikvision Digital Technology Co., Ltd., Hangzhou, Zhejiang 310051 (CN)
(72) Inventor: JIANG, Hongwei, Hangzhou Zhejiang 310051 (CN); XU, Wei, Hangzhou Zhejiang 310051 (CN)
(74) Representative: Liebetanz, Michael
(86) International application number: PCT/CN2016/099192
(87) International publication number: WO 2017/211017

(56) References cited:
- CN-A- 102 004 368
- CN-U- 201 974 620
- CN-U- 202 812 682
- CN-U- 202 818 451
- CN-U- 202 901 737
- CN-U- 205 123 881
- KR-B1- 101 308 741
- US-A- 2 243 212
- US-A1- 2015 277 214

## Description

The present application claims the priority to a Chinese Patent Application No. 201620546744.8, filed with the China National Intellectual Property Administration on June 06, 2016 and entitled "CAMERA OPTICAL AXIS ADJUSTING DEVICE, AND CAMERA HAVING SAME".

### TECHNICAL FIELD

The present application relates to the technical field of a camera device, and in particular to a camera optical axis adjusting device and a camera having the same.

### BACKGROUND

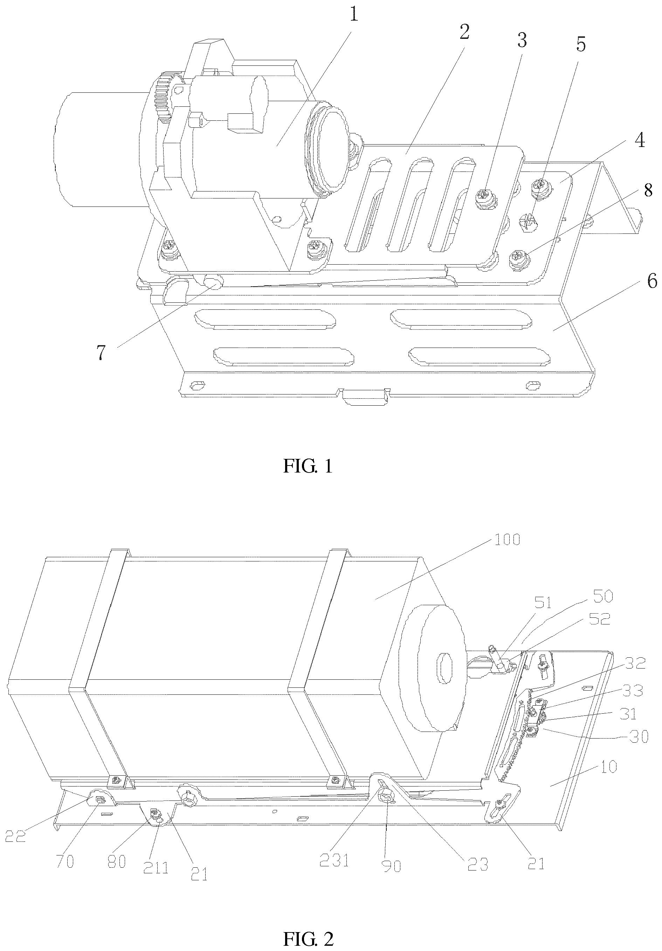

The arrangement for adjusting the angle of an optical axis commonly used in the industry is shown in FIG. 1, which is mainly composed of a vertical adjusting plate 2, a horizontal adjusting plate 4, a support 6, a vertical adjusting mechanism and a horizontal adjusting mechanism. An optical axis system 1 to be adjusted is fixed on the vertical adjusting plate 2. The vertical adjusting plate 2 is connected to the horizontal adjusting plate 4 through a horizontal rotation shaft 7, and is screwed to the other end of the horizontal adjusting plate 4 through an adjusting screw 3 and a set of supporting springs (not shown in the figure).When the adjusting screw 3 is rotated in left and right directions, the vertical adjusting plate 2 may be rotated up and down with respect to the horizontal adjusting plate 4 around the horizontal rotation shaft 7, and thereby the optical axis system 1 fixed on the vertical adjusting plate 2 is also driven to rotate up and down with respect to the horizontal adjusting plate 4 around the horizontal rotation shaft 7. After the adjustment is completed, spring forces of springs are used for preload, and no other fastening measures are added. The horizontal adjusting plate 4 is connected to the support 6 through a vertical rotation shaft and a cam 5. When the cam 5 is rotated in left and right directions, the horizontal adjusting plate 4 is driven to rotate horizontally with respect to the support 6 around the vertical rotation shaft due to the eccentric feature of the cam 5, and thereby the vertical adjusting plate 2 connected to the horizontal adjusting plate 4 and the optical axis system 1 fixed on the vertical adjusting plate 2 are driven to rotate horizontally together with respect to the support 6 around the vertical rotation shaft. After the adjustment is completed, the horizontal adjusting plate 4 is fastened on the support 6 by using two fastening screws 8.

In the above solution, the vertical adjusting plate 2 is connected to the horizontal adjusting plate 4 only through the horizontal rotation shaft 7, the adjusting screw 3 and springs. The connection rigidity is poor, and an optical axis system 1 with a large mass cannot be loaded, and shake and resonance are likely to occur during use due to the poor rigidity, which affects the adjustment of the optical axis system 1. The horizontal adjustment is achieved through the cam 5, but the cam 5 itself is unstable, resulting in difficulty in adjustment, difficulty in alignment, and more difficulty in fine adjustment.

Also, in the art are known some methods or devices as described in their respective documents.

For example, US 2243212A discloses a support for motion picture projection machines, wherein the support comprises in combination, a pedestal, a pedestal arm support mounted on the pedestal for lateral movement, means for moving said pedestal arm support laterally relative to said pedestal, means for locking said pedestal arm support in position on said pedestal, a pedestal arm mounted on said pedestal arm support for vertical tilting movement, means for tilting said pedestal arm, means for locking said pedestal arm in position on said pedestal arm support, a lamp house carriage mounted on said pedestal ram, a three point adjustable support for said lamp house carriage, and means for locking said lamp house carriage at four points.

### SUMMARY

The main objective of the present application is to provide a camera optical axis adjusting device and a camera having the same, so as to solve the problem that the camera optical axis adjusting device in the prior art is poor in rigidity and difficult to be adjusted.

The above-mentioned objective is solved with the features of independent claims.

Further embodiments are defined in the dependent claims.

In order to achieve the above objective, according to an aspect of the present application, a camera optical axis adjusting device is provided. The device includes a support; a horizontal adjusting plate rotatably mounted on the support; a horizontal adjusting mechanism, including a rack and a pinion that engage with each other; a vertical adjusting plate, configured for mounting a camera optical axis system; and a vertical adjusting mechanism, including a screw rod and a slider mounted on the screw rod. Wherein, one of the rack and the pinion is mounted on the horizontal adjusting plate, and the other one of the rack and the pinion is mounted on the support; a first end of the vertical adjusting plate is rotatably mounted on the horizontal adjusting plate; a length direction of the screw rod coincides with a height direction of the support, a first end of the screw rod is hinged on the horizontal adjusting plate, and a second end of the vertical adjusting plate is fixed on the slider.

Further, the rack is provided at a side of the horizontal adjusting plate, and the pinion is mounted on the support through a pinion carrier.

Further, the rack is a circular-arc rack.

Further, a plurality of lugs are provided at a periphery of the horizontal adjusting plate, a first waist-shaped hole is provided in each of the lugs, and the horizontal adjusting plate is fixed on the support through a fastener that is provided through the first waist-shaped holes.

Further, a first rotation shaft is provided on the support, and the horizontal adjusting plate is mounted on the support through the first rotation shaft.

Further, a first protrusion is provided at each of opposite first and second sides of the horizontal adjusting plate, a second rotation shaft is mounted between the first protrusions at the first and second sides of the horizontal adjusting plate, and the first end of the vertical adjusting plate is mounted on the horizontal adjusting plate through the second rotation shaft.

Further, a second protrusion is provided at each of the opposite first and second sides of the horizontal adjusting plate, a second waist-shaped hole extending along the height direction of the support is provided in the second protrusion, and the vertical adjusting plate is fixed on the horizontal adjusting plate through a positioning member that is provided through the second waist-shaped hole.

Further, the positioning member is a set screw that is a screw larger than M4.

Further, the first end of the screw rod is hinged on the horizontal adjusting plate through a hinge.

According to another aspect of the present application, a camera is provided, including any one of the above camera optical axis adjusting devices.

With the technical solution of the present application, during using the camera optical axis adjusting device in the present application, the camera optical axis system may be mounted on the vertical adjusting plate. When the camera optical axis system needs to be adjusted, the horizontal adjusting plate may be driven to rotate on the support by rotating the pinion and the rack of the horizontal adjusting mechanism, and then the camera optical axis system is driven to rotate in the horizontal direction. At the same time, under the action of the vertical adjusting mechanism, when the screw rod is rotated, the slider may be driven to move along the length direction of the screw rod. In turn, the vertical adjusting plate is driven to rotate around the first end of the vertical adjusting plate to adjust the height of the vertical adjusting plate, and then completing the adjustment of height of the mounted camera optical axis system.

Compared with the adjustment method by using the cam, the adjusting screw and the springs in the prior art, it is more convenient to perform the adjustment by using the pinion, the rack, the screw rod and the slider in the present application and the adjustment precision is higher. Also, the strength of the camera optical axis adjusting device in the present application is obviously improved, which is convenient to carry a camera optical axis system with a large weight.

### BRIEF DESCRIPTION OF THE DRAWINGS

The drawings that form a part of this application are used to provide a further understanding of the present application. The illustrative embodiments of the present application and the description thereof are used to explain the present application and do not constitute an improper limitation on the present application. In the drawings:
FIG. 1 schematically shows a structural perspective view of an existing camera optical axis adjusting device;
FIG. 2 schematically shows a structural perspective view of a camera optical axis system mounted on a camera optical axis adjusting device of the present application;
FIG. 3 schematically shows a front view of the camera optical axis adjusting device in the present application;
FIG. 4 schematically shows a top view of the camera optical axis adjusting device in the present application; and
FIG. 5 schematically shows a section view of the camera optical axis adjusting device in the present application.

Wherein, the correspondences between the names of various assemblies and corresponding reference signs in FIG. 1 are:
1, optical axis system; 2, vertical adjusting plate; 3, adjusting screw; 4, horizontal adjusting plate; 5, cam; 6, support; 7, horizontal rotation shaft; 8, fastening screw.

The correspondences between the names of various assemblies and corresponding reference signs in FIG. 2 to FIG. 5 are:
10, support; 20, horizontal adjusting plate; 21, lug; 211, first waist-shaped hole; 22, first protrusion; 23, second protrusion; 231, second waist-shaped hole; 30, horizontal adjusting mechanism; 31, pinion; 32, rack; 33, pinion carrier; 40, vertical adjusting plate; 41, through hole; 42, mounting slot; 50, vertical adjusting mechanism; 51, screw rod; 52, slider; 521, mounting groove; 53, hinge; 60, first rotation shaft; 70, second rotation shaft; 80, fastener; 90, positioning member; 100, camera optical axis system.

### DETAILED DESCRIPTION

It should be noted that, features of embodiments and embodiments in the present application may be combined with each other without conflict. The present application will be described in detail with reference to the accompanying drawings and in combination with the embodiments.

It should be noted that the terms used herein are only for the purpose of describing the specific implementations, and are not intended to limit the exemplary implementations according to the present application. As used herein, the singular form is intended to include the plural form unless the context clearly indicates otherwise. In addition, it should be understood that when the terms "comprise" and/or "include" are used in the present description, they are intended to indicate the presence of features, steps, operations, components, assemblies and/or combinations thereof.

It should be noted that the terms "first", "second" and the like in the description and claims and the above-described drawings of the present application are used to distinguish similar objects, and are not necessarily used to describe a specific order or a sequential order. It should be understood that the data used in this way may be interchanged where appropriate, such that the implementation of the present application described herein can be implemented, for example, in an order other than those illustrated or described herein. In addition, the terms "include" and "have" and any variants thereof are intended to cover a non-exclusive inclusion. For example, processes, methods, systems, products or devices that contain a series of steps or units are not necessarily limited to those steps or units that are clearly listed, but may include other steps or units that are not clearly listed or are inherent to such processes, methods, products or devices.

Referring to Figures 2 to 5, a camera optical axis adjusting device is provided according to an embodiment of the present application.

The camera optical axis adjusting device in this embodiment includes a support 10, a horizontal adjusting plate 20, a horizontal adjusting mechanism 30, a vertical adjusting plate 40 and a vertical adjusting mechanism 50.

The horizontal adjusting plate 20 is rotatably mounted on the support 10. The horizontal adjusting mechanism 30 includes a rack 32 and a pinion 31 that engage with each other. In the design process, one of the rack 32 and the pinion 31 is mounted on the horizontal adjusting plate 20, and the other one of the rack 32 and the pinion 31 is mounted on the support 10, such that the horizontal adjusting plate 20 can be driven to rotate on the support 10 when the rack 32 and the pinion 31 rotate. The vertical adjusting plate 40 is configured for mounting a camera optical axis system 100. During mounting, the first end of the vertical adjusting plate 40 is rotatably mounted on the horizontal adjusting plate 20. The vertical adjusting mechanism 50 includes a screw rod 51 and a slider 52. The length direction of the screw rod 51 coincides with the height direction of the support 10. The first end of the screw rod 51 is hinged on the horizontal adjusting plate 20. The second end of the vertical adjusting plate 40 is fixed on the slider 52.

During the usage of the camera optical axis adjusting device of this embodiment, the camera optical axis system 100 may be mounted on the vertical adjusting plate 40. When the optical axis system 100 of the camera needs to be adjusted, the horizontal adjusting plate 20 may be driven to rotate on the support 10 by rotating the pinion 31 and the rack 32 of the horizontal adjusting mechanism 30, and then the camera optical axis system 100 is driven to rotate in the horizontal direction. At the same time, under the action of the vertical adjusting mechanism 50, when the screw rod 51 is rotated, the slider 52 may be driven to move along the length direction of the screw rod 51. In turn, the vertical adjusting plate 40 is driven to rotate around a first end of the vertical adjusting plate 40 to adjust the height of the vertical adjusting plate 40, and then completing the height adjustment for the mounted camera optical axis system 100.

Compared with the adjustment method by using a cam, an adjusting screw and springs in the prior art, it is more convenient to perform the adjustment by using the pinion 31, the rack 32, the screw rod 51 and the slider 52 in this embodiment and the adjustment precision is higher. Also, the strength of the camera optical axis adjusting device in this embodiment is obviously improved, which is convenient to carry a camera optical axis system 100 with a large weight.

According to the above structure, it can be known that during the vertical adjustment of the vertical adjusting plate 40 in this embodiment, the vertical adjusting plate 40 is raised and lowered around the first end thereof. Therefore, in order to avoid interference between the screw rod 51 and the vertical adjusting plate 40, the first end of the screw rod 51 is hinged on the horizontal adjusting plate 20 in this embodiment. Preferably, the first end of the screw rod 51 in this embodiment is hinged on the horizontal adjusting plate 20 through a hinge 53.

Of course, in other embodiments of the present application, the first end of the screw rod 51 may also be hinged on the horizontal adjusting plate 20 through a structure such as a screw. Other variations made under the concept of the present application are within the scope of the present application.

Similarly, during the connection of the vertical adjusting plate 40 and the slider 52, interference between the vertical adjusting plate 40 and the slider 52 should also be prevented. Therefore, in this embodiment, a mounting groove 521 is provided on the slider 52, and the vertical adjusting plate 40 is mounted within the mounting groove 521. At the same time, in order to be able to quickly mount the slider 52 and the vertical adjusting plate 40 together, a through hole 41 is also provided at the second end of the vertical adjusting plate 40 in this embodiment, wherein the cross-sectional area of the through hole 41 is larger than that of the slider 52; and a mounting slot 42 communicating with the through hole 41 is further provided. During mounting, the slider 52 is first inserted into the through hole 41, and then moved along the mounting slot 42, such that both sides of the mounting slot 42 are clamped within the mounting groove 521 on the slider 52.

In a preferred embodiment of the present application, the rack 32 is provided at a side of the horizontal adjusting plate 20, while the pinion 31 is mounted on the support 10 through a pinion carrier 33. When the camera optical axis system 100 needs to be horizontally adjusted, it is only necessary to rotate the pinion 31 and then the rack 32 fixed on the horizontal adjusting plate 20 is driven to rotate.

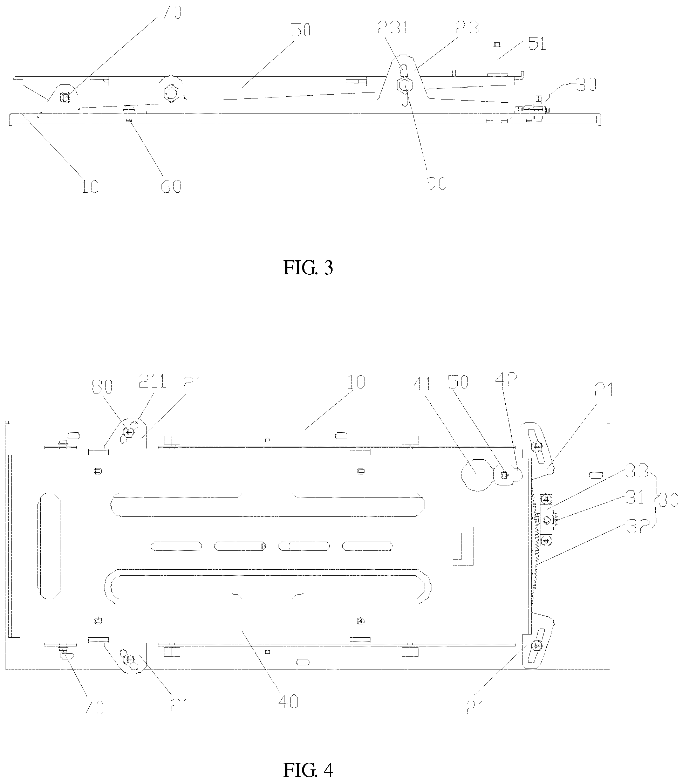

As shown in FIG. 2 and FIG. 4, in this embodiment, the pinion carrier 33 includes two supporting blocks and a positioning block connecting between the two supporting blocks. During mounting, the pinion carrier 33 is disposed above the pinion 31, and at this time, the pinion 31 is located below the supporting block. The pinion 31 is provided with an adjusting column extending beyond the supporting block. When in use, the pinion 31 may be rotated by rotating the adjusting column by means of a tool such as a wrench, and then the rack 32 is driven to actuate the horizontal adjusting plate 20 to rotate. Preferably, the rack 32 in this embodiment is a circular-arc rack, which facilitates the engagement with the pinion 31 to adjust the horizontal adjusting plate 20.

After the horizontal adjusting plate 20 in this embodiment is adjusted to a predetermined position, in order to ensure the stability of the camera optical axis system 100, it is also necessary to fix the horizontal adjusting plate 20. Therefore, in this embodiment, a plurality of lugs 21 are provided at the periphery of the horizontal adjusting plate 20, and a first waist-shaped hole 211 is provided in each of lugs 21. After the horizontal adjusting plate 20 is adjusted, the horizontal adjusting plate 20 may be fixed on the support 10 through a fastener 80 that is provided through the first waist-shaped holes 211.

In this embodiment, the fastener 80 is a screw. Of course, in other embodiments of the present application, the fastener 80 may also be configured as a structure such as a bolt or a rivet.

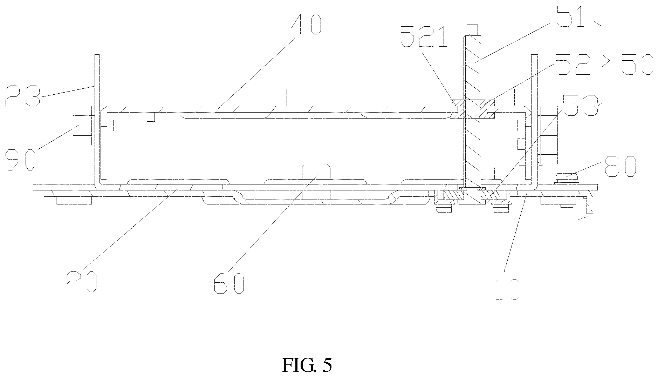

Referring to FIG. 3 and FIG. 5, in this embodiment, a first rotation shaft 60 is provided on the support 10. When mounting, the horizontal adjusting plate 20 is mounted on the support 10 through the first rotation shaft 60. Due to the provision of the first rotation shaft 60, the horizontal adjusting plate 20 may be rotated around the first rotation shaft 60 during the adjustment of the horizontal adjusting plate 20, which facilitates positioning and adjustment of the horizontal adjusting plate 20.

Referring to FIG. 2 to FIG. 5 again, in this embodiment, a first protrusion 22 is provided at each of opposite first and second sides of the horizontal adjusting plate 20. Furthermore, a second rotation shaft 70 is mounted between the first protrusions 22 on the first and second sides of the horizontal adjusting plate 20. When mounting, the first end of the vertical adjusting plate 40 is mounted on the horizontal adjusting plate 20 through the second rotation shaft 70. Thus, when the screw rod 51 is rotated, the vertical adjusting plate 40 may be rotated around the second rotation shaft 70, which enables a simple structure and convenient adjustment.

Similarly, after the vertical adjusting plate 40 in this embodiment is adjusted to a predetermined position, in order to ensure the stability of the camera optical axis system 100, it is also necessary to fix the vertical adjusting plate 40. For this purpose, in this embodiment, a second protrusion 23 is provided at each of the opposite first and second sides of the horizontal adjusting plate 20. Furthermore, a second waist-shaped hole 231 extending along the height direction of the support 10 is provided in the second protrusion 23. After the vertical adjusting plate 40 is adjusted, the vertical adjusting plate 40 may be fixed on the horizontal adjusting plate 20 through a positioning member 90 that is provided through the second waist-shaped holes 231.

Preferably, in this embodiment, the positioning member 90 is a set screw that is a screw larger than M4, which is convenient to ensure the structural strength of the entire camera optical axis adjusting device.

In this embodiment, the diameter of the screw rod 51 is not less than 10 mm. Moreover, the thickness of the horizontal adjusting plate 20 and/or the vertical adjusting plate 40 is larger than 2 mm, such that it is convenient to improve the structure stability of the camera optical axis adjusting device, and thus to carry a camera optical axis system 100 with a large weight.

From the above embodiment, it can be known that:
when in use, the camera optical axis system 100 is fixed to the vertical adjusting plate 40. The vertical adjusting plate 40 and the left and right sides of the vertical adjusting plate 40 are rotatably connected to the first protrusions 22 at the left and right sides of the horizontal adjusting plate 20 through the second rotation shaft 70. The left and right sides of the vertical adjusting plate 40 are provided between the first protrusions 22 at the left and right sides of the horizontal adjusting plate 20. There are four M4 threaded holes at the left and right sides of the vertical adjusting plate 40. There are four long waist-shaped holes in the second protrusions 23 at the left and right sides of the horizontal adjusting plate 20. The vertical adjusting plate 40 is connected with the horizontal adjusting plate 20 by the fastening screws passing through long waist-shaped holes at the left and right sides of the horizontal adjusting plate 20 and being pre-locked in the M4 threaded holes at the left and right sides of the vertical adjusting plate 40, and by the slider 52 provided on the vertical adjusting plate 40 and the screw rod 51 that passes through the slider 52 and is connected with the horizontal adjusting plate 20 through the hinge 53. When up and down adjustment is performed, the screw rod 51 is rotated in left and right directions, and the screw rod 51 drives the slider 52 and the vertical adjusting plate 40 to rotate up and down with respect to the horizontal adjusting plate 20 around the second rotation shaft 70. Thereby, the camera optical axis system 100 (visible light camera) fixed on the vertical adjusting plate 40 is driven to rotate up and down with respect to the horizontal adjusting plate 20 around the second rotation shaft 70. After the adjustment is completed, four fastening screws pre-locked at the left and right sides of the vertical adjusting plate 40 are locked to rigidly fasten the vertical adjusting plate 40 and the horizontal adjusting plate 20 together.

The horizontal adjusting plate 20 is connected with the support 10 through the first rotation shaft 60 and four screws; wherein, four screws pass through the first waist-shaped holes 211 in the horizontal adjusting plate 20 and then pre-locked within the M4 threaded holes in the support 10 of the system. A rack 32 is also pre-mounted on the horizontal adjusting plate 20, and the horizontal adjusting plate 20 is connected with the support 10 of the system through a pinion 31 fixed on the support 10 of the system. When horizontal adjustment is performed, the pinion 31 is rotated in left and right directions, such that the rack 32 and the horizontal adjusting plate 20 may be driven to horizontally rotate with respect to the support 10 of the system around the first rotation shaft 60. After the adjustment is completed, four screws pre-locked on the support 10 of the system are locked to rigidly fasten the horizontal adjusting plate 20 and the support 10 together.

According to another aspect of the present application, a camera is provided, including a camera optical axis adjusting device described above.

From the above description, it can be seen that the above embodiments of the present application achieve the following technical effects.

The present application mainly enables angle adjustment of the optical axis of a visible light camera in a heavy load pan-tilt where visible light and infrared cameras (that is, visible light and infrared optical axis systems) are simultaneously present. The angle adjustment can be realized such that the optical axis of the visible light optical axis system (the visible light camera) can be adjusted to be substantially parallel or at a certain set angle to a main optical axis; wherein, the infrared optical axis system (the infrared camera) is set as the main optical axis that is fixed and non-adjustable.

When in use, the vertical adjusting plate in the present application is rigidly connected to the horizontal adjusting plate not only through the horizontal rotation shaft, the screw rod, the slider and the hinge, but also through the four fastening screws at the left and right sides of the vertical adjusting plate. Therefore, the entire mechanism has high connection rigidity, which is not easily deformed and vibrated, and can also carry an optical axis system with a large mass.

The horizontal direction adjustment is achieved by the cooperation of a pinion and a rack, such that the adjustment is easier and fine adjustment may be performed due to the stability of the pinion-rack mechanism. Since the mechanism of the present application has good structural rigidity and structural strength, a camera optical axis system with a large mass can be carried.

For convenience of description, spatially relative terms such as "on", "over", "on a upper surface", "above", etc., may be used herein to describe the spatial positional relationship of an element or a feature with other elements or features as shown in the figures. It should be understood that spatially relative terms are intended to encompass different orientations in use or operations in addition to the orientations of the device described in the figures. For example, if the elements in the figures are inverted, the elements described as "over other elements or configurations" or "on other elements or configurations" will then be positioned as "under other devices or configurations" or "below other elements or configurations". Thus, the exemplary term "over" may include two orientations, i.e., "over" and "under". The element may also be positioned in other different ways (rotated 90 degrees or at other orientations) and the spatially relative description herein is explained accordingly.

## Claims

1. A camera optical axis adjusting device, **characterized in that** it is used for adjusting a camera optical axis system and comprises:
a support (10);
a horizontal adjusting plate (20) rotatably mounted on the support (10);
a horizontal adjusting mechanism (30), comprising a rack (32) and a pinion (31) that engage with each other; wherein, one of the rack (32) and the pinion (31) is mounted on the horizontal adjusting plate (20), and the other one of the rack (32) and the pinion (31) is mounted on the support (10);
a vertical adjusting plate (40), configured for mounting the camera optical axis system (100); wherein, a first end of the vertical adjusting plate (40) is rotatably mounted on the horizontal adjusting plate (20); and
a vertical adjusting mechanism (50), comprising a screw rod (51) and a slider (52) mounted on the screw rod (51); wherein, the slider (52) comprises a mounting groove (521), a length direction of the screw rod (51) coincides with a height direction of the support (10), a first end of the screw rod (51) is hinged on the horizontal adjusting plate (20) through a hinge (53), and a second end of the vertical adjusting plate (40) is fixed on the slider (52) through the mounting groove (521).

2. The camera optical axis adjusting device of claim 1, wherein, the rack (32) is provided at a side of the horizontal adjusting plate (20), and the pinion (31) is mounted on the support (10) through a pinion carrier (33).

3. The camera optical axis adjusting device of claim 1, wherein, the rack (32) is a circular-arc rack.

4. The camera optical axis adjusting device of claim 1, wherein, a plurality of lugs (21) are provided at a periphery of the horizontal adjusting plate (20), a first waist-shaped hole (211) is provided in each of the lugs (21), and the horizontal adjusting plate (20) is fixed on the support (10) through a fastener (80) that is provided through the first waist-shaped holes (211).

5. The camera optical axis adjusting device of claim 1, wherein, a first rotation shaft (60) is provided on the support (10), and the horizontal adjusting plate (20) is mounted on the support (10) through the first rotation shaft (60).

6. The camera optical axis adjusting device of claim 1, wherein, a first protrusion (22) is provided at each of opposite first and second sides of the horizontal adjusting plate (20), a second rotation shaft (70) is mounted between the first protrusions (22) at the first and second sides of the horizontal adjusting plate (20), and the first end of the vertical adjusting plate (40) is mounted on the horizontal adjusting plate (20) through the second rotation shaft (70).

7. The camera optical axis adjusting device of claim 6, wherein, a second protrusion (23) is provided at each of the opposite first and second sides of the horizontal adjusting plate (20), a second waist-shaped hole (231) extending along the height direction of the support (10) is provided in the second protrusion (23), and the vertical adjusting plate (40) is fixed on the horizontal adjusting plate (20) through a positioning member (90) that is provided through the second waist-shaped hole (231).

8. The camera optical axis adjusting device of claim 7, wherein, the positioning member (90) is a set screw that is a screw larger than M4.

9. A camera, comprising a camera optical axis system and a camera optical axis adjusting device, which is the camera optical axis adjusting device of any one of claims 1 to 8.

## Patentansprüche

1. Vorrichtung zur Einstellung der optischen Achse einer Kamera, **dadurch gekennzeichnet, dass** sie zur Einstellung eines optischen Achsensystems einer Kamera verwendet wird und umfasst:
einen Träger (10);
eine horizontale Einstellplatte (20), die drehbar auf dem Träger (10) montiert ist;
einen horizontalen Einstellmechanismus (30), der eine Zahnstange (32) und ein Ritzel (31) umfasst, die miteinander in Eingriff stehen; wobei entweder die Zahnstange (32) oder das Ritzel (31) an der horizontalen Einstellplatte (20) montiert ist und das jeweils andere Teil der Zahnstange (32) und des Ritzels (31) an dem Träger (10) montiert ist;
eine vertikale Einstellplatte (40), die zur Montage des optischen Achsensystem (100) einer Kamera konfiguriert ist; wobei ein erstes Ende der vertikalen Einstellplatte (40) drehbar an der horizontalen Einstellplatte (20) montiert ist; und
einen vertikalen Einstellmechanismus (50), der eine Schraubenstange (51) und einen auf der Schraubenstange (51) montierten Schieber (52) umfasst; wobei der Schieber (52) eine Montagenut (521) umfasst, eine Längsrichtung der Schraubenstange (51) mit einer Höhenrichtung des Trägers (10) zusammenfällt, ein erstes Ende der Schraubenstange (51) über ein Scharnier (53) an der horizontalen Einstellplatte (20) angelenkt ist und ein zweites Ende der vertikalen Einstellplatte (40) über die Montagenut (521) am Schieber (52) befestigt ist.

2. Vorrichtung zur Einstellung der optischen Achse einer Kamera nach Anspruch 1, wobei die Zahnstange (32) an einer Seite der horizontalen Einstellplatte (20) vorgesehen ist und das Ritzel (31) über einen Ritzelträger (33) an der Halterung (10) befestigt ist.

3. Vorrichtung zur Einstellung der optischen Achse einer Kamera nach Anspruch 1, wobei die Zahnstange (32) eine Kreisbogenzahnstange ist.

4. Vorrichtung zur Einstellung der optischen Achse einer Kamera nach Anspruch 1, wobei eine Vielzahl von Nasen (21) an einem Umfang der horizontalen Einstellplatte (20) vorgesehen ist, ein erstes eine Taillenform aufweisendes Loch (211) in jeder der Nasen (21) vorgesehen ist und die horizontale Einstellplatte (20) auf dem Träger (10) durch ein Befestigungsmittel (80) befestigt ist, das durch die ersten eine Taillenform aufweisenden Löcher (211) vorgesehen ist.

5. Vorrichtung zur Einstellung der optischen Achse einer Kamera nach Anspruch 1, wobei eine erste Drehwelle (60) an dem Träger (10) vorgesehen ist und die horizontale Einstellplatte (20) an dem Träger (10) über die erste Drehwelle (60) befestigt ist.

6. Vorrichtung zur Einstellung der optischen Achse einer Kamera nach Anspruch 1, wobei ein erster Vorsprung (22) an jeder von gegenüberliegenden ersten und zweiten Seiten der horizontalen Einstellplatte (20) vorgesehen ist, eine zweite Drehwelle (70) zwischen den ersten Vorsprüngen (22) an der ersten und zweiten Seite der horizontalen Einstellplatte (20) montiert ist und das erste Ende der vertikalen Einstellplatte (40) an der horizontalen Einstellplatte (20) durch die zweite Drehwelle (70) montiert ist.

7. Vorrichtung zur Einstellung der optischen Achse einer Kamera nach Anspruch 6, wobei ein zweiter Vorsprung (23) an jeder der gegenüberliegenden ersten und zweiten Seiten der horizontalen Einstellplatte (20) vorgesehen ist, ein zweites eine Taillenform aufweisendes Loch (231), das sich entlang der Höhenrichtung der Halterung (10) erstreckt, in dem zweiten Vorsprung (23) vorgesehen ist, und die vertikale Einstellplatte (40) an der horizontalen Einstellplatte (20) durch ein Positionierungselement (90) befestigt ist, das durch das zweite eine Taillenform aufweisende Loch (231) vorgesehen ist.

8. Vorrichtung zur Einstellung der optischen Achse einer Kamera nach Anspruch 7, wobei das Positionierelement (90) eine Stellschraube ist, die eine Schraube größer als M4 ist.

9. Kamera, umfassend ein optisches Achsensystem einer Kamera und eine Vorrichtung zur Einstellung der optischen Achse einer Kamera, welches die Vorrichtung zur Einstellung der optischen Achse einer Kamera nach einem der Ansprüche 1 bis 8 ist.

## Revendications

1. Dispositif de réglage de l'axe optique d'une caméra, **caractérisé en ce qu'**il est utilisé pour régler un système d'axe optique de caméra et comprend :
un support (10) ;
une plaque de réglage horizontale (20) montée de manière rotative sur le support (10) ;
un mécanisme de réglage horizontal (30), comprenant une crémaillère (32) et un pignon (31) qui s'engagent l'un avec l'autre ; dans lequel, l'un de la crémaillère (32) et du pignon (31) est monté sur la plaque de réglage horizontal (20), et l'autre de la crémaillère (32) et du pignon (31) est monté sur le support (10) ;
une plaque de réglage vertical (40), configurée pour le montage du système d'axe optique de caméra (100) ; dans lequel, une première extrémité de la plaque de réglage vertical (40) est montée de manière rotative sur la plaque de réglage horizontal (20) ; et
un mécanisme de réglage vertical (50), comprenant une tige filetée (51) et un coulisseau (52) monté sur la tige filetée (51) ; dans lequel, le coulisseau (52) comprend une rainure de montage (521), où une direction longitudinale de la tige filetée (51) coïncide avec une direction en hauteur du support (10), une première extrémité de la tige filetée (51) est articulée sur la plaque de réglage horizontal (20) par une charnière (53), et une deuxième extrémité de la plaque de réglage vertical (40) est fixée sur le coulisseau (52) par la rainure de montage (521).

2. Dispositif de réglage de l'axe optique d'une caméra selon la revendication 1, dans lequel, la crémaillère (32) est prévue sur un côté de la plaque de réglage horizontal (20), et le pignon (31) est monté sur le support (10) par l'intermédiaire d'un porte-pignon (33).

3. Dispositif de réglage de l'axe optique d'une caméra selon la revendication 1, dans lequel, la crémaillère (32) est une crémaillère en arc de cercle.

4. Dispositif de réglage de l'axe optique d'une caméra selon la revendication 1, dans lequel, une pluralité de pattes (21) sont prévues sur une périphérie de la plaque de réglage horizontale (20), un premier trou en forme taillé (211) est prévu dans chacune des pattes (21), et la plaque de réglage horizontale (20) est fixée sur le support (10) par l'intermédiaire d'une fixation (80) qui est prévue à travers les premiers trous en forme taillé (211).

5. Dispositif de réglage de l'axe optique d'une caméra selon la revendication 1, dans lequel, un premier arbre de rotation (60) est prévu sur le support (10), et la plaque de réglage horizontal (20) est montée sur le support (10) à travers le premier arbre de rotation (60).

6. Dispositif de réglage de l'axe optique d'une caméra selon la revendication 1, dans lequel, une première saillie (22) est prévue sur chacun des premier et second côtés opposés de la plaque de réglage horizontale (20), un second arbre de rotation (70) est monté entre les premières saillies (22) sur les premier et second côtés de la plaque de réglage horizontale (20), et la première extrémité de la plaque de réglage verticale (40) est montée sur la plaque de réglage horizontale (20) par l'intermédiaire du second arbre de rotation (70).

7. Dispositif de réglage de l'axe optique d'une caméra selon la revendication 6, dans lequel, une deuxième saillie (23) est prévue sur chacun des premier et deuxième côtés opposés de la plaque de réglage horizontale (20), un deuxième trou en forme taillé (231) s'étendant dans la direction de la hauteur du support (10) est prévu dans la deuxième saillie (23), et la plaque de réglage verticale (40) est fixée sur la plaque de réglage horizontale (20) par l'intermédiaire d'un élément de positionnement (90) qui est prévu à travers le deuxième trou en forme taillé (231).

8. Dispositif de réglage de l'axe optique d'une caméra selon la revendication 7, dans lequel l'élément de positionnement (90) est une vis de réglage qui est une vis plus grande que M4.

9. Caméra, comprenant un système d'axe optique de caméra et un dispositif de réglage d'axe optique d'une caméra, qui est le dispositif de réglage de l'axe optique d'une caméra de l'une quelconque des revendications 1 à 8.
